# EUROPÄISCHE PATENTSCHRIFT

(11) **EP 1 607 544 B1**
(45) Veröffentlichungstag und Bekanntmachung des Hinweises auf die Patenterteilung: **15.04.2009**
(21) Anmeldenummer: 05011912.2
(22) Anmeldetag: 02.06.2005
(51) Int. Cl.: E04F 15/20, B32B 3/08, E04F 13/00

(54) **Schalldämmeinrichtung für einen Wand-, Decken- oder Bodenbelag**
Sound damping arrangement for a wall, ceiling or floor covering
Dispositif d'amortissement du son pour un revêtement de mur, de plafond ou de sol

(30) Priorität: 17.06.2004 EP 04014185
(43) Veröffentlichungstag der Anmeldung: 21.12.2005
(73) Patentinhaber: Heimbach GmbH & Co. KG, 52353 Düren (DE)
(72) Erfinder: Halterbeck, Walter, 52353 Düren (DE); Hüser, Martin, 52351 Düren (DE)
(74) Vertreter: Paul, Dieter-Alfred

(56) Entgegenhaltungen:
- EP-A- 1 209 301
- WO-A-02/053858
- DE-A- 2 659 551
- GB-A- 1 103 895
- PATENT ABSTRACTS OF JAPAN Bd. 1999, Nr. 14, 22. Dezember 1999 (1999-12-22) & JP 11 256802 A (SANSEI SHIMIZU:KK), 21. September 1999 (1999-09-21)
- PATENT ABSTRACTS OF JAPAN Bd. 1995, Nr. 07, 31. August 1995 (1995-08-31) & JP 07 102744 A (EIDAI CO LTD), 18. April 1995 (1995-04-18)
- PATENT ABSTRACTS OF JAPAN Bd. 2000, Nr. 19, 5. Juni 2001 (2001-06-05) & JP 2001 050551 A (SEKISUI CHEM CO LTD), 23. Februar 2001 (2001-02-23)

## Beschreibung

Die Erfindung betrifft eine Schalldämmeinrichtung für einen Wand-, Decken- oder Bodenbelag, mit einem Träger, der wenigstens eine Schalldämmschicht aus polymerem Schaum aufweist, die eine Vielzahl von Vorsprüngen unter Bildung von Zwischenräumen zwischen den Vorsprüngen ausbildet. Die Erfindung bezieht sich ferner auf einen Wand- oder Bodenbelag, der mit der vorgenannten Schalldämmeinrichtung versehen ist.

Zur Verbesserung der Schalldämmung, insbesondere der Trittschalldämmung bei Bodenplatten, ist es bekannt, ein Paneel auf der Rückseite, die für die Auflage auf dem Boden bzw. auf der Wand bestimmt ist, mit einer Schalldämmeinrichtung zu versehen, die eine Schalldämmschicht aufweist. Als Schalldämmschichten sind Lagen aus Kork, polymeren Schäumen, Elastomeren oder dergleichen vorgeschlagen worden (vgl. WO 02/053858). Die Schalldämmschicht kann mit dem Paneel fest verbunden sein oder zwischen Paneel und Boden bzw. Wand lose eingelegt sein. Dabei kann die Schalldämmschicht auch mit weiteren Schichten kombiniert sein.

In der JP 112 56 802 ist eine Platte mit einer Schalldämmschicht aus einem Kunststoffschaum offenbart. Die GB 1 103 895 A zeigt eine Platte, bei der die Schalldämmschicht aus einem mehrlagigem Kunststoffnetz besteht. In der JP 7 102 744 ist eine Platte mit einer Schalldämmschicht offenbart, die eine Vielzahl von nach unten vorstehenden halbkreisförmigen Rippen ausbildet. Eine solche Schalldämmschicht ist auch der JP 2 001 050 551 A zu entnehmen, wobei die Schalldämmschicht aus einem starren Kunststoffschaum besteht, der untenseitig durch eine Zusatzschicht abgedeckt ist.

In der DE-A-26 59 551 ist eine Schalldämmeinrichtung mit einer Schalldämmschicht aus Schaumstoff offenbart, die ein aus Schaumstoffstegen bestehendes Gitter mit geschlossenen Durchbrechungen ausbildet. Die Herstellung eines solchen Gitters ist jedoch relativ kompliziert. In der EP 1 209 301 A2 ist eine Schalldämmeinrichtung dargestellt, bei der auf einem Träger eine Schalldämmschicht aus polymerem Schaum aufgebracht ist, wobei die Schalldämmschicht aus einer Vielzahl von Vorsprüngen gebildet wird, die unter Bildung von Zwischenräumen voneinander beabstandet sind. Die Vorsprünge sind als durchgehende oder unterbrochene Rippen oder als punktförmige Vorsprünge ausgebildet. Die Zwischenräume zwischen den Vorsprüngen sind so groß, dass durch sie über die Fläche des Trägers durchgehende Geraden projiziert werden können.

Die vorbekannten Schalldämmeinrichtungen bewirken eine nicht vollständig zufriedenstellende Schalldämmung. Der Erfindung liegt somit die Aufgabe zugrunde, eine Schalldämmeinrichtung für einen Wand- oder Bodenbelag zu schaffen, die eine verbesserte Schalldämmung bewirkt.

Diese Aufgabe wird - ausgehend von der EP 1 209 301 A2 - erfindungsgemäß in einer ersten Version mit punktartigen Vorsprüngen dadurch gelöst, dass die Vorsprünge derart verteilt angeordnet sind, dass durch die Zwischenräume keine über die Fläche des Trägers durchgehende Gerade projizierbar ist, ohne auf die Vorsprünge zu treffen. Vorzugsweise können die Vorsprünge als Kreis- oder Mehreckflächen ausgebildet sein. In einer zweiten Version mit als Rippen ausgebildeten Vorsprüngen wird die Aufgabe erfindungsgemäß dadurch gelöst, dass die Rippen derart verteilt angeordnet sind und einen solch geringen Abstand zueinander haben, dass durch die zwischenräume keine über die Fläche des Trägers durchgehende Gerade projizierbar ist, ohne auf die Rippen zu treffen.

Versuche haben ergeben, dass die radiale Ausbreitung des Schalls aufgrund des Auftretens beispielsweise eines Fußes auf den Belag wesentlich herabgesetzt und demgemäß die Schalldämmung erheblich verbessert wird. Da sich die Schallwellen in keiner Richtung linear ausbreiten können, ohne auf Vorsprünge der Schalldämmschicht zu treffen, verfangen sie sich auf kurzem Weg mit der Folge, dass die Schalldämmung besonders wirksam ist. Dabei zeichnet sich die erfindungsgemäße Schalldämmeinrichtung durch einfache Herstellbarkeit wie beispielsweise durch Extrudierung der Vorsprünge aus.

In Ausbildung der Erfindung ist vorgesehen, dass die Rippen unterbrochen, aber auch durchgehend verlaufen.

Eine Verbesserung der Schalldämmung wird schon dann erreicht, wenn nur ein Teil der Rippen richtungsändernd verläuft, andere Rippen aber gradlinig. Vorzuziehen ist jedoch, dass sämtliche Rippen richtungsändernd verlaufen. Dabei können die Rippen auch unterschiedlich richtungsändernd verlaufen, so dass eine wirre Struktur erzielt wird. Alternativ dazu oder in Kombination damit können auch Rippen vorhanden sein, die parallel zueinander richtungsändernd verlaufen. Dies kann auch auf alle Rippen zutreffen.

Nach einer weiteren Ausgestaltung der Erfindung ist vorgesehen, dass Rippen in wiederkehrenden Mustern richtungsändernd verlaufen. Alternativ dazu oder in Kombination damit können Rippen vorgesehen sein, die unregelmäßig verlaufen. Dabei können mehrere Rippen Rippengruppen bilden, die unterschiedlichen Verlauf haben.

Konkret können Rippen einzeln oder gruppenweise wellenförmig, zickzackförmig oder mäanderförmig verlaufen. Alternativ dazu oder in Kombination damit können Rippen auch in geschlossenen Mustern verlaufen, beispielsweise unter Bildung von Kreisen, Spiralen oder Vielecken, wozu auch Dreiecke und Rechtecke zählen. Dabei sind die Muster so gegeneinander versetzt, dass in die Zwischenräume zwischen den Mustern keine über die Fläche der Schalldämmeinrichtung durchgehende Gerade projizierbar ist, ohne auf die Muster zu treffen. Es versteht sich, dass die verschiedenen Ausführungsformen der Rippenverläufe auch miteinander kombiniert werden können, d.h. wellenförmige, zickzackförmige, mäanderförmige und/oder geschlossene Muster.

Die Vorsprünge sollten eine Höhe von 0,1 bis 8 mm, vorzugsweise 0,5 bis 6 mm haben, wobei die Basisbreite zwischen 5 bis 20 mm vorzugsweise 8 mm bis 12 mm liegen sollte. An der Basis sollte der Abstand der Vorsprünge bis max. 10 mm betragen. Die Querschnitte der Vorsprünge können beliebig sein. So können die Vorsprünge auch Rechteckform haben. Vorzugsweise sollten sie sich jedoch verjüngen, beispielsweise bogenförmig, dreieckig oder trapezförmig. Die Flächenabdeckung der Vorsprünge an der Basis sollte zwischen 60 und 100% liegen.

Als Material für die Vorsprünge kommen zähelastische Schäume beispielsweise aus Polyurethan, Polystyrol, Polyether oder Silikonelastomer in Frage. Der Schaum sollte eine Dichte von 0,2 bis 2,5 kg/m³ haben, vorzugsweise 0,5 bis 1,5 kg/m³. Die Shorehärte A sollte zwischen 20 und 70 liegen, vorzugsweise zwischen 30 bis 50. Die Wasseraufnahme sollte kleiner als 2% sein, vorzugsweise gegen 0 tendieren.

Der Träger für die Schalldämmschicht kann beispielsweise als wenigstens eine Trägerfolie ausgebildet sein. Diese kann aus Papier, Pappe, Karton, Kunststoff wie beispielsweise PE, PET, PP oder PA, oder Metall, wie beispielsweise Aluminium, Zinn und/oder Kupfer, oder Kombinationen daraus bestehen. Dabei kann die Trägerfolie auch aus Folienschichten unterschiedlichen Materials zusammengesetzt sein. Soweit mehr als eine Trägerfolie vorgesehen ist, kann es zweckmäßig sein, die Schalldämmschicht zwischen zwei Trägerfolien einzuschließen. Die Trägerfolie kann dabei auch als Dampf- oder Flüssigkeitssperre ausgebildet sein.

Die Trägerfolie(n) sollte ein Gewicht zwischen 20 und 200 g/m², vorzugsweise 35 bis 100 g/m² haben. Die Dicke kann zwischen 10 bis 500 µm betragen.

Alternativ dazu kann vorgesehen sein, dass der Träger eine starre oder halbstarre Belagschicht aufweist oder daraus besteht. Dabei kann die Kombination aus Schalldämmschicht und Belagschicht gleichzeitig den Wand- oder Bodenbelag bilden.

Der Träger kann aber auch wenigstens ein textiles Trägermaterial aufweisen oder daraus bestehen. In Frage kommen hierfür beispielsweise verfestigtes Faservlies, Spinnvlies, Gewebe, Gewirke, Fadengelege oder -gitter oder auch Kombinationen dieser Materialien. Für das Faservlies können Massenkunststoffe wie PE, PP, PET, PVAc oder PVC oder auch Glas verwendet werden. Sofern ein Gewebe, Gewirke, Fadengelege oder -gitter verwendet wird, eignen sich PE, PP, PA oder PET oder Glas. Diese Materialien können aus gesponnen, texturierten, multifilen oder monofilen Fäden oder auch Bändchen bestehen.

Zu der Erfindung gehört ferner ein Boden- oder Wandbelag mit einer Belagschicht sowie mit einer Schalldämmeinrichtung, wie sie vorstehend im Einzelnen beschrieben ist. Dabei kann die Schalldämmeinrichtung lose an der Unterseite der Belagschicht anliegen oder mit ihr beispielsweise durch Verkleben, verbunden sein. Die Belagschicht kann als Paneel oder auch als Kunststoffbahn ausgebildet sein.

Die Herstellung der erfindungsgemäßen Schalldämmeinrichtung kann in der Weise erfolgen, dass die Schalldämmschicht mittels Düsen auf den Träger aufgebracht wird. Alternativ dazu kann jedoch die Ausbildung der Schalldämmschicht auch so erfolgen, dass zunächst eine Schaumschicht flächig auf den Träger aufgebracht wird und dass dann der noch nicht ausgehärtete Schaumstoff mit einem Negativstempel geprägt wird, vorzugsweise so, dass in den Tälern zwischen den Vorsprüngen verdichtete Zonen entstehen. Dies kann auch dadurch unterstützt werden, dass die Prägung bei erhöhten Temperaturen stattfindet, so dass der Schaum in den Tälern zusammenschmilzt und hierdurch noch stärker verdichtet.

In der Zeichnung ist die Erfindung anhand von mehreren schematisch dargestellten Ausführungsbeispielen näher veranschaulicht. Es zeigen:
- Figur 1: eine Draufsicht auf eine Schalldämmeinrichtung mit wellenförmigen Rippen;
- Figur 2: eine Draufsicht auf eine zweite Schalldämmeinrichtung mit zickzackförmig verlaufenden Rippen;
- Figur 3: eine Draufsicht auf eine dritte Schalldämmeinrichtung mit trapezförmig verlaufenden Rippen;
- Figur 4: eine Draufsicht auf eine Schalldämmeinrichtung mit Gruppen aus konzentrisch angeordneten Rippen;
- Figur 5: eine perspektivische Draufsicht auf die Schalldämmeinrichtung gemäß Figur 2 und
- Figuren 6 bis 9: Querschnitte durch Paneele mit Schalldämmeinrichtungen, die Rippen unterschiedlicher Rippenquerschnitte aufweisen.

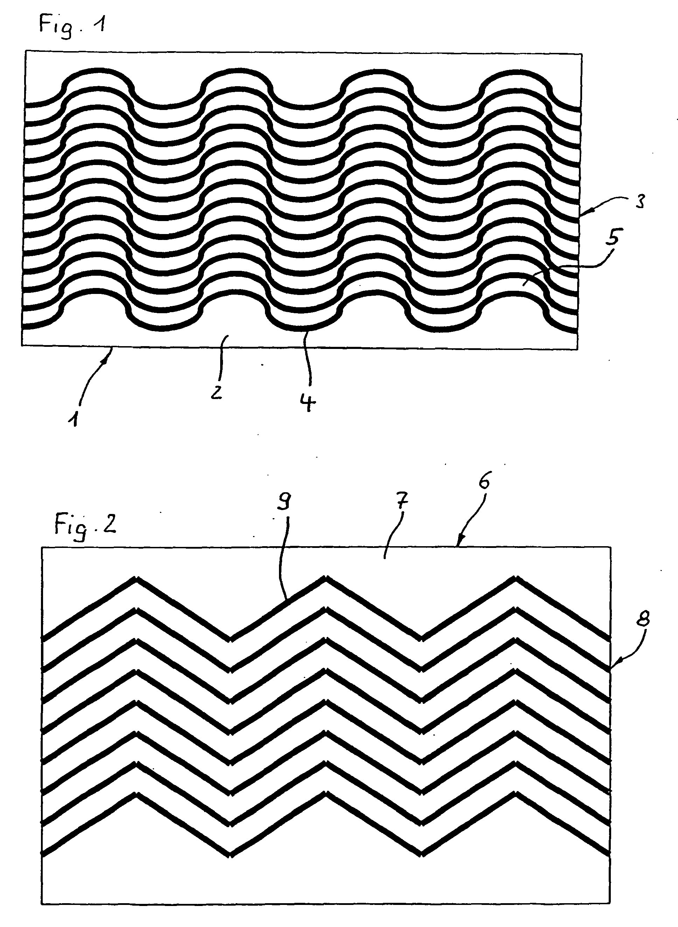

Das Ausführungsbeispiel gemäß Figur 1 zeigt eine Schalldämmeinrichtung 1, die aus einer Trägerfolie 2 mit einer darauf aufgebrachten Schalldämmschicht 3 besteht. Die Schalldämmschicht 3 wird von beispielhaft mit 4 bezeichneten Rippen gebildet, die wellenförmigen Verlauf haben, wobei die Rippen 4 im wesentlichen parallel zueinander verlaufen. Der Verlauf jeder Rippe 4 ist durch jeweils eine Linie symbolisiert. Der Abstand der Rippen 4 zueinander ist so eng, daß Zwischenräume - beispielhaft mit 5 bezeichnet - gebildet werden, in die keine durchgehende Gerade hineinprojiziert werden könnte. Auf diese Weise treffen die von einem Punkt ausgehenden Schallwellen schon nach kurzer Strecke auf Rippen 4, können sich also nicht über die gesamte Fläche der Schalldämmeinrichtung 1 ausbreiten, sondern werden durch die besondere Form und Anordnung der Rippen 4 in jedem Fall gebrochen.

Figur 2 zeigt eine zweite Schalldämmeinrichtung 6 mit einer Trägerfolie 7 und mit einer darauf aufgebrachten Schalldämmschicht 8. Diese wird von beispielhaft mit 9 bezeichneten Rippen gebildet, die in diesem Fall zickzackförmig, ansonsten jedoch parallel zueinander verlaufen. Der Verlauf jeder Rippe 9 ist auch hier durch jeweils eine Linie symbolisiert. Bei dieser Schalldämmeinrichtung 6 ist der Abstand der Rippen 9 zueinander ebenfalls so klein, daß in die Zwischenräume zwischen den Rippen 9 keine über die Fläche der Schalldämmeinrichtung 6 durchgehende Gerade projiziert werden könnte.

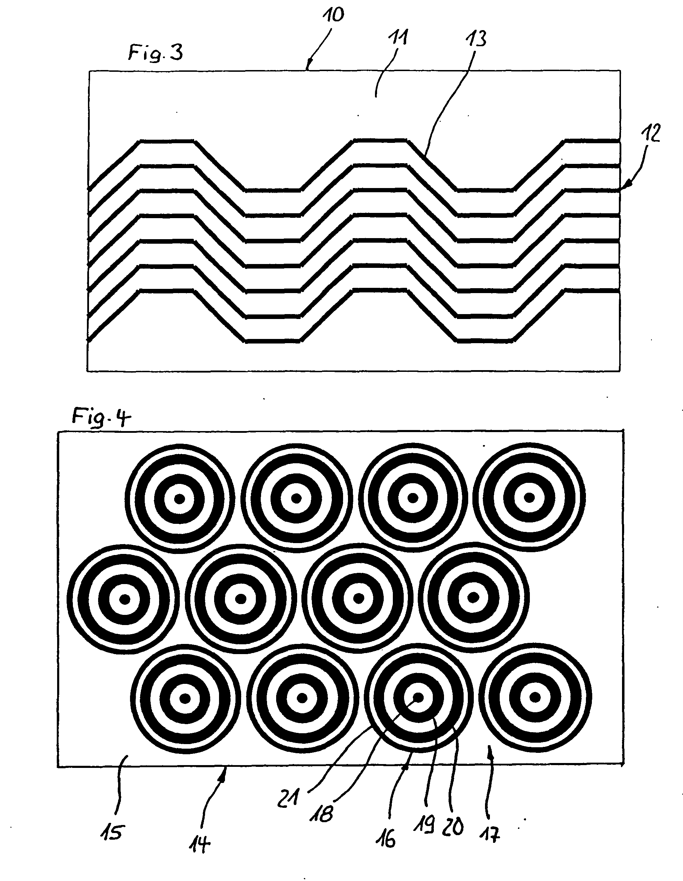

In Figur 3 ist eine weitere Schalldämmeinrichtung 10 zu sehen, bei der auf einer Trägerfolie 11 eine Schalldämmschicht 12, bestehend aus trapezförmig hin- und her verlaufenden Rippen - beispielhaft mit 13 bezeichnet - vorhanden ist. Die Rippen 13 sind gleichfalls durch Linien symbolisiert. Sie erstrecken sich parallel zueinander und haben einen so geringen Abstand, dass in die Zwischenräume keine durchgehende Gerade hineingelegt werden könnte.

Figur 4 zeigt eine Schalldämmeinrichtung 14. Bei dieser Schalldämmeinrichtung 14 sind auf einer Trägerfolie 15 voneinander getrennte Kreisgruppen - beispielhaft mit 16 bezeichnet - aufgebracht, die in versetzten Reihen hintereinander angeordnet sind und zusammen eine Schalldämmschicht 17 bilden. Jede Kreisgruppe 16 besteht aus einer mittigen, punktförmigen Rippe 18 sowie dazu konzentrischen Rippen 19, 20, 21.

Die Zwischenräume zwischen den Rippen 18, 19, 20, 21 bilden geschlossene Ringe. Die Kreisgruppen 16 sind so gegeneinander versetzt, daß in die Zwischenräume zwischen den Kreisgruppen 16 keine über die Fläche der Schalldämmeinrichtung 14 hindurchgehende Gerade projiziert werden könnte.

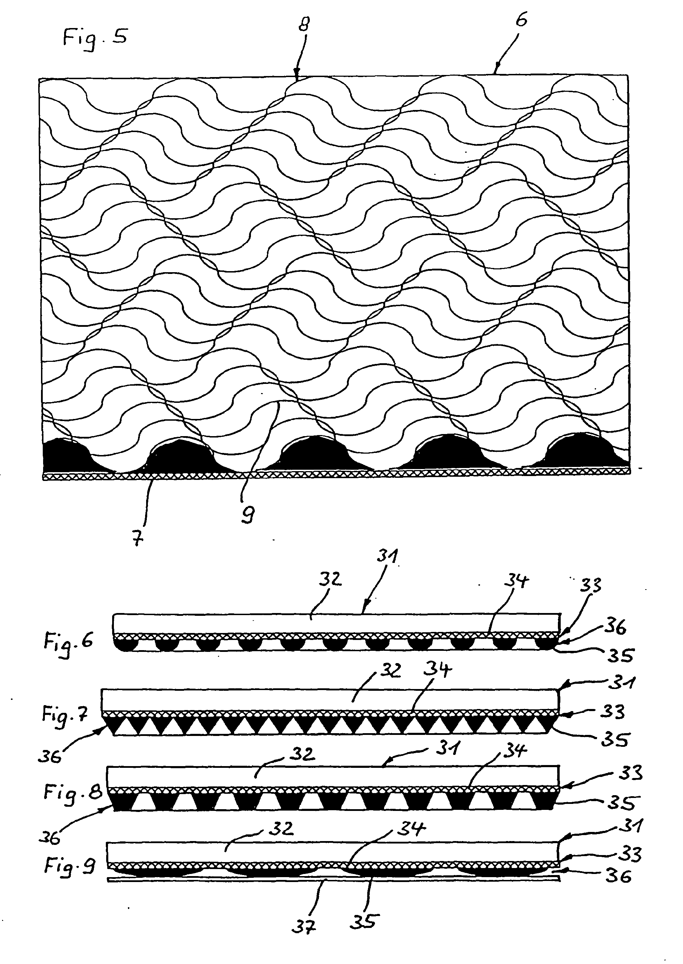

In den Figuren 6 bis 9 sind Beispiele von verschiedenen Rippenquerschnittsformen dargestellt, wobei gleiche bzw. funktionsgleiche Teile mit denselben Bezugsziffern versehen sind. Im Querschnitt dargestellt sind Bodenbeläge 31, jeweils bestehend aus einem Holzpaneel 32 und einer insgesamt als 33 bezeichneten Schalldämmeinrichtung, die an die Unterseite des jeweiligen Holzpaneels 32 angeklebt ist. Jede Schalldämmeinrichtung 33 weist paneelseitig eine Trägerfolie 34 auf, deren Unterseite mit Rippen - beispielhaft mit 35 bezeichnet - versehen ist. Die Rippen 35 bilden jeweils eine Schalldämmschicht 36.

In Figur 6 haben die Rippen 35 halbkreisförmigen Querschnitt, in Figur 7 dreiecksförmigen Querschnitt, in Figur 8 trapezförmigen Querschnitt und in Figur 9 linsenförmigen Querschnitt. Bei dem in Figur 9 dargestellten Beispiel sind die Rippen 35 mit einer Außenfolie 37 abgedeckt, so dass die Schalldämmschicht 36 bzw. deren Rippen 35 von der Trägerfolie 34 einerseits und der Außenfolie 37 andererseits eingeschlossen ist.

## Patentansprüche

1. Schalldämmeinrichtung (14) für einen Wand-, Decken- oder Bodenbelag (31), mit einem Träger (15), der wenigstens eine Schalldämmschicht (17) aus polymerem Schaum aufweist, die eine Vielzahl von punktartigen Vorsprüngen (16, 18, 19, 20, 21) mit Zwischenräumen zwischen den Vorsprüngen (16, 18, 19, 20, 21) ausbildet, **dadurch gekennzeichnet, dass** die punktartigen Vorsprünge (16, 18, 19, 20, 21) derart verteilt angeordnet sind, dass durch die Zwischenräume keine über die Fläche des Trägers durchgehende Gerade projizierbar ist, ohne auf Vorsprünge (16, 18, 19, 20, 21) zu treffen.

2. Schalldämmeinrichtung nach Anspruch 1, **dadurch gekennzeichnet, dass** die punktartigen Vorsprünge (16, 18, 19, 20, 21) Kreis- oder Mehreckflächen ausbilden.

3. Schalldämmeinrichtung (1, 6, 10, 33) für einen Wand-, Decken- oder Bodenbelag (31), mit einem Träger (2, 7, 11, 15, 34, 37), der wenigstens eine Schalldämmschicht (3, 8, 12, 17, 36) aus polymerem Schaum aufweist, die eine Vielzahl von Vorsprüngen mit Zwischenräumen (5) zwischen den Vorsprüngen ausbildet, wobei die Vorsprünge als Rippen (4, 9, 13, 18 - 21, 35) ausgebildet sind, die im Abstand zueinander richtungsändernd verlaufen, **dadurch gekennzeichnet, dass** die Rippen derart verteilt angeordnet sind und einen solch geringen Abstand zueinander haben, dass durch die Zwischenräume (5) keine über die Fläche des Trägers (2, 7, 11, 15, 34, 37) durchgehende Gerade projizierbar ist, ohne auf Rippen (4, 9, 13, 18 - 21, 35) zu treffen.

4. Schalldämmeinrichtung nach Anspruch 3, **dadurch gekennzeichnet, dass** Rippen (4, 9, 13, 18 - 21, 35) durchgehend sind.

5. Schalldämmeinrichtung nach Anspruch 3 oder 4, **dadurch gekennzeichnet, dass** sämtliche Rippen (4, 9, 13, 18 - 21, 35) richtungsändernd verlaufen.

6. Schalldämmeinrichtung nach einem der Ansprüche 3 bis 5, **dadurch gekennzeichnet, dass** Rippen vorhanden sind, die unterschiedlich richtungsändernd verlaufen.

7. Schalldämmeinrichtung nach einem der Ansprüche 3 bis 6, **dadurch gekennzeichnet, dass** Rippen (4, 9, 13, 18 - 21, 35) vorhanden sind, die parallel zueinander richtungsändernd verlaufen.

8. Schalldämmeinrichtung nach einem der Ansprüche 3 bis 7, **dadurch gekennzeichnet, dass** Rippen (4, 9, 13, 18 - 21, 35) in wiederkehrenden Mustern richtungsändernd verlaufen.

9. Schalldämmeinrichtung nach einem der Ansprüche 3 bis 8, **dadurch gekennzeichnet, dass** Rippen unregelmäßig richtungsändernd verlaufen.

10. Schalldämmeinrichtung nach einem der Ansprüche 3 bis 9, **dadurch gekennzeichnet, dass** jeweils mehrere Rippen Rippengruppen bilden, die unterschiedlich verlaufen.

11. Schalldämmeinrichtung nach einem der Ansprüche 3 bis 10, **dadurch gekennzeichnet, dass** Rippen (4, 9, 13) wellenförmig oder mäanderförmig verlaufen.

12. Schalldämmeinrichtung nach einem der Ansprüche 3 bis 11, **dadurch gekennzeichnet, dass** Rippen (18 - 21) in geschlossenen Mustern (16) unter Bildung von Zwischenräumen zwischen den Mustern (16) verlaufen, und die Muster (16) so gegeneinander versetzt sind, dass in die Zwischenräume zwischen den Mustern (16) keine über die Fläche der Schalldämmeinrichtung (14) durchgehende Gerade projizierbar ist, ohne auf Muster (16) zu treffen.

13. Schalldämmeinrichtung nach Anspruch 12, **dadurch gekennzeichnet, dass** Rippen (18 - 21) unter Bildung von Kreisen, Spiralen oder Vielecken verlaufen.

14. Schalldämmeinrichtung nach einem der Ansprüche 3 bis 13, **dadurch gekennzeichnet, dass** der Querschnitt der Vorsprünge (4, 9, 13, 18 - 21, 35) bogenförmig, rechteckig, dreieckig, linsen- oder trapezförmig ist.

15. Schalldämmeinrichtung nach einem der Ansprüche 1 bis 14, **dadurch gekennzeichnet, dass** die Vorsprünge (4, 9, 13, 18 - 21, 35) eine Höhe von 0,1 bis 8 mm, vorzugsweise 0,5 bis 6 mm haben.

16. Schalldämmeinrichtung nach einem der Ansprüche 1 bis 15, **dadurch gekennzeichnet, dass** Vorsprünge (4, 9, 13, 18 - 21) unterschiedlicher Höhe vorhanden sind.

17. Schalldämmeinrichtung nach einem der Ansprüche 1 bis 16, **dadurch gekennzeichnet, dass** die Vorsprünge (4, 9, 13, 18 - 21, 35) eine Basisbreite von 5 bis 20 mm, vorzugsweise 8 bis 12 mm haben.

18. Schalldämmeinrichtung nach einem der Ansprüche 1 bis 17, **dadurch gekennzeichnet, dass** der Abstand der Vorsprünge (4, 9, 13, 18 - 21, 35) bis 10 mm geht.

19. Schalldämmeinrichtung nach einem der Ansprüche 1 bis 18, **dadurch gekennzeichnet, dass** die Flächenabdeckung der Vorsprünge (4, 9, 13, 18 - 21, 35) an der Rippenbasis von 60 bis 100 % geht.

20. Schalldämmeinrichtung nach einem der Ansprüche 1 bis 19, **dadurch gekennzeichnet, dass** die Vorsprünge (4, 9, 13, 18 - 21, 35) aus Polyurethan, Polystyrol, Polyether oder Silikonelastomer bestehen.

21. Schalldämmeinrichtung nach einem der Ansprüche 1 bis 20, **dadurch gekennzeichnet, dass** der polymere Schaum eine Dichte von 0,2 bis 2,5 kg/m³ hat, vorzugsweise 0,5 bis 1,5 kg/m³.

22. Schalldämmeinrichtung nach einem der Ansprüche 1 bis 21, **dadurch gekennzeichnet, dass** der polymere Schaum eine Shorehärte A von 20 bis 70 hat, vorzugsweise 30 bis 50.

23. Schalldämmeinrichtung nach einem der Ansprüche 1 bis 22, **dadurch gekennzeichnet, dass** der polymere Schaum eine Wasseraufnahme von weniger als 2 % hat.

24. Schalldämmeinrichtung nach einem der Ansprüche 1 bis 23, **dadurch gekennzeichnet, dass** der Träger als wenigstens eine durchgehende, geprägte oder gelochte Trägerfolie ( 2, 7, 11, 15, 34) ausgebildet ist.

25. Schalldämmeinrichtung nach Anspruch 24, **dadurch gekennzeichnet, dass** die Trägerfolie (2, 7, 11, 15, 34, 37) aus Papier, Pappe, Karton, Kunststoff oder Metall oder Kombinationen daraus besteht.

26. Schalldämmeinrichtung nach Anspruch 24 oder 25, **dadurch gekennzeichnet, dass** die Trägerfolie (2, 7, 11, 15, 34, 37) als Dampf- oder Flüssigkeitssperre ausgebildet ist.

27. Schalldämmeinrichtung nach einem der Ansprüche 24 bis 26, **dadurch gekennzeichnet, dass** die Trägerfolie (2, 7, 11, 15, 34, 37) aus Folienschichten unterschiedlichen Materials zusammengesetzt ist.

28. Schalldämmeinrichtung nach einem der Ansprüche 24 bis 27, **dadurch gekennzeichnet, dass** die Schalldämmschicht (36) zwischen zwei Trägerfolien (34, 37) eingeschlossen ist.

29. Schalldämmeinrichtung nach einem der Ansprüche 24 bis 28, **dadurch gekennzeichnet, dass** die Trägerfolie(n) (2, 7, 11, 15, 34, 37) ein Gewicht zwischen 20 und 200 g/m², vorzugsweise 35 und 100 g/m² hat bzw. haben.

30. Schalldämmeinrichtung nach einem der Ansprüche 24 bis 29, **dadurch gekennzeichnet, dass** die Trägerfolie(n) (2, 7, 11, 15, 34, 37) eine Dicke zwischen 10 bis 500 µm hat bzw. haben.

31. Schalldämmeinrichtung nach einem der Ansprüche 1 bis 30, **dadurch gekennzeichnet, dass** der Träger eine starre oder halbstarre Belagschicht aufweist oder daraus besteht.

32. Schalldämmeinrichtung nach einem der Ansprüche 1 bis 31, **dadurch gekennzeichnet, dass** der Träger wenigstens ein textiles Trägermaterial aufweist oder daraus besteht.

33. Schalldämmeinrichtung nach Anspruch 32, **dadurch gekennzeichnet, dass** das textile Trägermaterial als verfestigtes Faservlies, als Spinnvlies, Gewebe, Gewirke oder Fadengelege oder -gitter oder als Kombination daraus ausgebildet ist.

34. Schalldämmeinrichtung nach Anspruch 33, **dadurch gekennzeichnet, dass** das Faservlies aus PE, PP, PET, PVAC, PVC oder dergleichen Massenkunststoffen oder aus Glas besteht.

35. Schalldämmeinrichtung nach Anspruch 34, **dadurch gekennzeichnet, dass** das Gewebe, Gewirke oder Fadengelege oder -gitter aus PE, PP, PA oder PET oder aus Glas besteht.

36. Schalldämmeinrichtung nach Anspruch 33 oder 35, **dadurch gekennzeichnet, dass** das Gewebe, Gewirke oder Fadengelege oder -gitter aus gesponnenen, texturierten, multifilen oder monofilen Fäden oder Bändchen besteht.

37. Schalldämmeinrichtung nach wenigstens den Ansprüchen 24 und 32, **dadurch gekennzeichnet, dass** der Träger eine Kombination aus Trägerfolie und textilem Trägermaterial aufweist.

38. Boden- oder Wandbelag (31) mit einer Belagsschicht (32) sowie mit einer Schalldämmeinrichtung (33) nach einem der Ansprüche 1 bis 37.

39. Boden- oder Wandbelag nach Anspruch 38, **dadurch gekennzeichnet, dass** die Schalldämmeinrichtung (33) lose an der Unterseite der Belagsschicht (32) anliegt.

40. Boden- oder Wandbelag nach Anspruch 38, **dadurch gekennzeichnet, dass** die Schalldämmeinrichtung (33) mit der Unterseite der Belagschicht (32) verbunden ist.

41. Boden- oder Wandbelag nach einem der Ansprüche 38 bis 40, **dadurch gekennzeichnet, dass** die Belagschicht als Paneel (32) oder Kunststoffbahn ausgebildet ist.

## Claims

1. A sound-absorbing device (14) for a wall covering, ceiling covering, or floor covering (31), having a support (15) that comprises at least one sound-absorbing layer (17) made of polymer foam, which layer constitutes a plurality of point-like protrusions (16, 18, 19, 20, 21) providing interstices between the protrusions (16, 18, 19, 20, 21), **characterized in that** the point-like protrusions (16, 18, 19, 20, 21) are arranged with a distribution such that a straight line that is continuous over the surface of the support (15) is not projectable through the interstices without striking protrusions (16, 18, 19, 20, 21).

2. The sound-absorbing device as defined in Claim 1, **characterized in that** the protrusions constitute circular or polygonal surfaces.

3. The sound-absorbing device (1, 6, 10, 33) for a wall covering, sealing covering or floor covering (31) having a support (2, 7, 11, 15, 34, 37) that comprises at least one sound-absorbing layer (3, 8, 12, 17, 36) made of polymer foam, which layer constitutes a plurality of protrusions providing interstices (5) between the protrusions, wherein the protrusions are embodied as ridges (4, 9, 13, 18-21, 35), which proceed in a direction-changing fashion having a space one to another, **characterized in that** the ridges are arranged with a distribution and having a such small distance one to another such that a straight line that is continuous over the surface of the support (2, 7, 11, 15, 34, 37) is not projectable through the interstices (5) without striking ridges (4, 9, 13, 18-21, 35).

4. The sound-absorbing device as defined in Claim 3, **characterized in that** ridges (4, 9, 13, 18-21, 35) are continuous.

5. The sound-absorbing device as defined in Claim 3 or 4, **characterized in that** all the ridges (4, 9, 13, 18-21, 35) proceed in a direction-changing fashion.

6. The sound-absorbing device as defined in one of Claims 3 through 5, **characterized in that** ridges are present that proceed in different d i-rection-changing fashions.

7. The sound-absorbing device as defined in one of Claims 3 through 6, **characterized in that** ridges (4, 9, 13, 18-21, 35) are present that proceed parallel to one another in a direction-changing fashion.

8. The sound-absorbing device as defined in one of Claims 3 through 7, **characterized in that** ridges (4, 9, 13, 18-21, 35) proceed in a direction-changing fashion in repeating patterns.

9. The sound-absorbing device as defined in one of Claims 3 through 8, **characterized in that** ridges proceed irregularly in a direction-changing fashion.

10. The sound-absorbing device as defined in one of Claims 3 through 9, **characterized in that** multiple ridges respectively form ridge groups that proceed in different fashions.

11. The sound-absorbing device as defined in one of Claims 3 through 10, **characterized in that** ridges (4, 9, 13) proceed in the shape of a wave or meander.

12. The sound-absorbing device as defined in one of Claims 3 through 11, **characterized in that** ridges (18-21) proceed in closed patterns (16), forming intersticks between the patterns (16), and the patterns (16) are shifted one to another such that a straight line is continuous over the surface of the sound-absorbing device (14) is not projectable through the intersticks between the patterns (16) without striking patterns (16).

13. The sound-absorbing device as defined in Claim 12, **characterized in that** ridges (18-21) proceed so as to form circles, spirals, or polygons.

14. The sound-absorbing device as defined in one of Claims 3 through 13, **characterized in that** the cross section of the protrusions (4, 9, 13, 18-21, 35) can be curved, rectangular, triangular, lenticular, or trapezoidal.

15. The sound-absorbing device as defined in one of Claims 1 through 14, **characterized in that** the protrusions (4, 9, 13, 18-21, 35) have a height of 0.1 to 8 mm, preferably 0.5 to 6 mm.

16. The sound-absorbing device as defined in one of Claims 1 through 15, **characterized in that** protrusions (4, 9, 13, 18-21) of different heights are present.

17. The sound-absorbing device as defined in one of Claims 1 through 16, **characterized in that** the protrusions (4, 9, 13, 18-21, 35) have a base width of 5 to 20 mm, preferably 8 to 12 mm.

18. The sound-absorbing device as defined in one of Claims 1 through 17, **characterized in that** the spacing of the protrusions (4, 9, 13, 18-21, 35) ranges to 10 mm.

19. The sound-absorbing device as defined in one of Claims 1 through 18, **characterized in that** the surface coverage of the protrusions (4, 9, 13, 18-21, 35) at the base of the ridges ranges from 60 to 100%.

20. The sound-absorbing device as defined in one of Claims 1 through 19, **characterized in that** the protrusions (4, 9, 13, 18-21, 35) are made of polyurethane, polystyrene, polyether, or silicone elastomer.

21. The sound-absorbing device as defined in one of Claims 1 through 20, **characterized in that** the polymer foam has a density of 0.2 to 2.5 kg/m³, preferably 0.5 to 1.5 kg/m³.

22. The sound-absorbing device as defined in one of Claims 1 through 21, **characterized in that** the polymer foam has a Shore A hardness of 20 to 70, preferably 30 to 50.

23. The sound-absorbing device as defined in one of Claims 1 through 22, **characterized in that** the polymer foam has a water uptake of less than 2%.

24. The sound-absorbing device as defined in one of Claims 1 through 23, **characterized in that** the support is embodied as at least one continuous, embossed, or perforated support film (2, 7, 11, 15, 34).

25. The sound-absorbing device as defined in Claim 24, **characterized in that** the support film (2, 7, 11, 15, 34, 37) is made from paper, paperboard, board, plastic, or metal, or combinations thereof.

26. The sound-absorbing device as defined in Claim 24 or 25, **characterized in that** the support film (2, 7, 11, 15, 34, 37) is embodied as a vapor barrier or liquid barrier.

27. The sound-absorbing device as defined in one of Claims 24 through 26, **characterized in that** the support film (2, 7, 11, 15, 34, 37) is assembled from film layers of different materials.

28. The sound-absorbing device as defined in one of Claims 24 through 27, **characterized in that** the sound-absorbing layer (36) is enclosed between two support films (34, 37).

29. The sound-absorbing device as defined in one of Claims 24 through 28, **characterized in that** the support film(s) (2, 7, 11, 15, 34, 37) has or have a weight of between 20 and 200 g/m³, preferably 35 and 100 g/m³.

30. The sound-absorbing device as defined in one of Claims 24 through 29, **characterized in that** the support film(s) (2, 7, 11, 15, 34, 37) has or have a thickness of between 10 and 500 µm.

31. The sound-absorbing device as defined in one of Claims 1 through 30, **characterized in that** the support has a rigid or semirigid covering layer, or is constituted thereby.

32. The sound-absorbing device as defined in one of Claims 1 through 31, **characterized in that** the support comprises at least one textile support material, or is constituted thereby.

33. The sound-absorbing device as defined in Claim 32, **characterized in that** the textile support material is embodied as consolidated nonwoven fabric, as spun-bonded fabric, woven fabric, knitted fabric, yarn layers or yarn lattices, or as a combination thereof.

34. The sound-absorbing device as defined in Claim 33, **characterized in that** the nonwoven fabric is made of PE, PP, PET, PVAc, PVC, or similar commodity plastics, or of glass.

35. The sound-absorbing device as defined in Claim 34, **characterized in that** the woven fabric, knitted fabric, yarn layer or yarn lattice is made of PE, PP, PA, or PET, or glass.

36. The sound-absorbing device as defined in Claim 33 or 35, **characterized in that** the woven fabric, knitted fabric, yarn layer, or yarn lattice is made of spun, texturized, multifilament, or monofilament yarns or ribbons.

37. The sound-absorbing device as defined in at least Claims 24 and 32, **characterized in that** the support comprises a combination of support film and textile support material.

38. A floor covering or wall covering (31) having a covering layer (32), and having a sound-absorbing device (33) as defined in one of Claims 1 through 37.

39. The floor covering or wall covering as defined in Claim 38, **characterized in that** the sound-absorbing device (33) rests loosely against the underside of the covering layer (32).

40. The floor covering or wall covering as defined in Claim 38, **characterized in that** the sound-absorbing device (33) is joined to the underside of the covering layer (32).

41. The floor covering or wall covering as defined in one of Claims 38 through 40, **characterized in that** the covering layer is embodied as a panel (32) or as a plastic web.

## Revendications

1. Dispositif d'isolation phonique (14) pour un revêtement mural, de plafond ou de sol (31), avec un support (15) qui présente au moins une couche insonorisante (17) en mousse polymère qui forme une pluralité de saillies ponctuelles (16, 18, 19, 20, 21) avec des espaces intermédiaires entre les saillies (16, 18, 19, 20, 21), **caractérisé en ce que** les saillies ponctuelles (16, 18, 19, 20, 21) sont disposées en étant réparties de telle sorte qu'on ne peut pas tracer en projection à travers les espaces intermédiaires une droite continue sur la surface du support (15) sans rencontrer des saillies (16, 18, 19, 20, 21).

2. Dispositif d'isolation phonique selon la revendication 1, **caractérisé en ce que** les saillies ponctuelles (16, 18, 19, 20, 21) forment des surfaces circulaires ou polygonales.

3. Dispositif d'isolation phonique (1, 6, 10, 33) pour un revêtement mural, de plafond ou de sol (31), avec un support (2, 7, 11, 15, 34, 37) qui présente au moins une couche insonorisante (3, 8, 12, 17, 36) en mousse polymère qui forme une pluralité de saillies avec des espaces intermédiaires (5) entre les saillies, les saillies étant réalisées sous forme de nervures (4, 9, 13, 18 - 21, 35) qui s'étendent à distance entre elles en changeant de direction, **caractérisé en ce que** les nervures sont disposées en étant réparties de telle sorte, et possèdent une distance entre elles tellement faible, qu'on ne peut pas tracer en projection à travers les espaces intermédiaires (5) une droite continue sur la surface du support (2, 7, 11, 15, 34, 37) sans rencontrer des nervures (4, 9, 13, 18 - 21,35).

4. Dispositif d'isolation phonique selon la revendication 3, **caractérisé en ce que** les nervures (4, 9, 13, 18 - 21, 35) sont continues.

5. Dispositif d'isolation phonique selon la revendication 3 ou 4, **caractérisé en ce que** toutes les nervures (4, 9, 13, 18 - 21, 35) s'étendent en changeant de direction.

6. Dispositif d'isolation phonique selon l'une des revendications 3 à 5, **caractérisé en ce qu'**il existe des nervures qui s'étendent en changeant de direction d'une manière différente.

7. Dispositif d'isolation phonique selon l'une des revendications 3 à 6, **caractérisé en ce qu'**il existe des nervures (4, 9, 13, 18 - 21, 35) qui s'étendent en changeant de direction parallèlement entre elles.

8. Dispositif d'isolation phonique selon l'une des revendications 3 à 7, **caractérisé en ce que** les nervures (4, 9, 13, 18 - 21, 35) s'étendent en changeant de direction suivant des motifs récurrents.

9. Dispositif d'isolation phonique selon l'une des revendications 3 à 8, **caractérisé en ce que** les nervures s'étendent en changeant de direction de façon irrégulière.

10. Dispositif d'isolation phonique selon l'une des revendications 3 à 9, **caractérisé en ce que** plusieurs nervures forment respectivement des groupes de nervures qui s'étendent de façon différente.

11. Dispositif d'isolation phonique selon l'une des revendications 3 à 10, **caractérisé en ce que** les nervures (4, 9, 13) s'étendent en ondulations ou en méandres.

12. Dispositif d'isolation phonique selon l'une des revendications 3 à 11, **caractérisé en ce que** les nervures (18 - 21) s'étendent en motifs fermés (16) en formant des espaces intermédiaires entre les motifs (16), et les motifs (16) sont décalés les uns par rapport aux autres de telle sorte qu'on ne peut pas tracer en projection dans les espaces intermédiaires entre les motifs (16) une droite continue sur la surface du dispositif d'isolation phonique (14) sans rencontrer des motifs (16).

13. Dispositif d'isolation phonique selon la revendication 12, **caractérisé en ce que** les nervures (18 - 21) s'étendent en formant des cercles, des spirales ou des polygones.

14. Dispositif d'isolation phonique selon l'une des revendications 3 à 13, **caractérisé en ce que** la section des saillies (4, 9, 13, 18 - 21, 35) est arquée, rectangulaire, triangulaire, lenticulaire ou trapézoïdale.

15. Dispositif d'isolation phonique selon l'une des revendications 1 à 14, **caractérisé en ce que** les saillies (4, 9, 13, 18 - 21, 35) possèdent une hauteur de 0,1 à 8 mm, de préférence de 0,5 à 6 mm.

16. Dispositif d'isolation phonique selon l'une des revendications 1 à 15, **caractérisé en ce qu'**il existe des saillies (4, 9, 13, 18 - 21) de hauteurs différentes.

17. Dispositif d'isolation phonique selon l'une des revendications 1 à 16, **caractérisé en ce que** les saillies (4, 9, 13, 18 - 21, 35) possèdent une largeur de base de 5 à 20 mm, de préférence de 8 à 12 mm.

18. Dispositif d'isolation phonique selon l'une des revendications 1 à 17, **caractérisé en ce que** la distance entre les saillies (4, 9, 13, 18 - 21, 35) va jusqu'à 10 mm.

19. Dispositif d'isolation phonique selon l'une des revendications 1 à 18, **caractérisé en ce que** la couverture surfacique des saillies (4, 9, 13, 18 - 21, 35) à la base des nervures va de 60 à 100 %.

20. Dispositif d'isolation phonique selon l'une des revendications 1 à 19, **caractérisé en ce que** les saillies (4, 9, 13, 18 - 21, 35) sont constituées de polyuréthane, de polystyrène, de polyéther ou d'élastomère de silicone.

21. Dispositif d'isolation phonique selon l'une des revendications 1 à 20, **caractérisé en ce que** la mousse polymère possède une densité de 0,2 à 2,5 kg/m³, de préférence de 0,5 à 1,5 kg/m³.

22. Dispositif d'isolation phonique selon l'une des revendications 1 à 21, **caractérisé en ce que** la mousse polymère possède une dureté Shore A de 20 à 70, de préférence de 30 à 50.

23. Dispositif d'isolation phonique selon l'une des revendications 1 à 22, **caractérisé en ce que** la mousse polymère possède une absorption d'eau inférieure à 2 %.

24. Dispositif d'isolation phonique selon l'une des revendications 1 à 23, **caractérisé en ce que** le support est réalisé sous la forme d'au moins une feuille de support continue (2, 7, 11, 15, 34), gaufrée ou perforée.

25. Dispositif d'isolation phonique selon la revendication 24, **caractérisé en ce que** la feuille de support (2, 7, 11, 15, 34, 37) est constituée de papier, de carton, de matière plastique ou de métal, ou de combinaisons de ces matériaux.

26. Dispositif d'isolation phonique selon la revendication 24 ou 25, **caractérisé en ce que** la feuille de support (2, 7, 11, 15, 34, 37) est conçue comme pare-vapeur ou comme barrière pour les liquides.

27. Dispositif d'isolation phonique selon l'une des revendications 24 à 26, **caractérisé en ce que** la feuille de support (2, 7, 11, 15, 34, 37) est composée de couches de feuille en différents matériaux.

28. Dispositif d'isolation phonique selon l'une des revendications 24 à 27, **caractérisé en ce que** la couche insonorisante (36) est incluse entre deux feuilles de support (34, 37).

29. Dispositif d'isolation phonique selon l'une des revendications 24 à 28, **caractérisé en ce que** la ou les feuilles de support (2, 7, 11, 15, 34, 37) possèdent un poids compris entre 20 et 200 g/m², de préférence entre 35 et 100 g/m².

30. Dispositif d'isolation phonique selon l'une des revendications 24 à 29, **caractérisé en ce que** la ou les feuilles de support (2, 7, 11, 15, 34, 37) possèdent une épaisseur comprise entre 10 et 500 µm.

31. Dispositif d'isolation phonique selon l'une des revendications 1 à 30, **caractérisé en ce que** le support présente une couche de revêtement rigide ou semi-rigide, ou en est constitué.

32. Dispositif d'isolation phonique selon l'une des revendications 1 à 31, **caractérisé en ce que** le support présente au moins un matériau porteur textile, ou en est constitué.

33. Dispositif d'isolation phonique selon la revendication 32, **caractérisé en ce que** le matériau porteur textile est réalisé sous la forme d'une nappe de fibres stabilisée, d'un filé-lié, d'un tissu, d'un article à mailles ou d'une nappe ou d'un treillis de fils, ou d'une combinaison d'entre eux.

34. Dispositif d'isolation phonique selon la revendication 33, **caractérisé en ce que** la nappe de fibres est constituée de PE, PP, PET, PVAC, PVC ou matières plastiques en masse analogues, ou de verre.

35. Dispositif d'isolation phonique selon la revendication 34, **caractérisé en ce que** le tissu, article à mailles ou nappe ou treillis de fils est constitué de PE, PP, PA ou PET, ou de verre.

36. Dispositif d'isolation phonique selon la revendication 33 ou 35, **caractérisé en ce que** le tissu, article à mailles ou nappe ou treillis de fils est constitué de bandelettes ou fils monofilaires ou multifilaires, filés et texturés.

37. Dispositif d'isolation phonique selon au moins les revendications 24 et 32, **caractérisé en ce que** le support présente une combinaison d'une feuille de support et d'un matériau porteur textile.

38. Revêtement de sol ou mural (31) avec une couche de revêtement (32) ainsi qu'avec un dispositif d'isolation phonique (33) selon l'une des revendications 1 à 37.

39. Revêtement de sol ou mural selon la revendication 38, **caractérisé en ce que** le dispositif d'isolation phonique (33) s'applique librement contre la face inférieure de la couche de revêtement (32).

40. Revêtement de sol ou mural selon la revendication 38, **caractérisé en ce que** le dispositif d'isolation phonique (33) est assemblé à la face inférieure de la couche de revêtement (32).

41. Revêtement de sol ou mural selon l'une des revendications 38 à 40, **caractérisé en ce que** la couche de revêtement est réalisée sous la forme d'un panneau (32) ou d'une bande de matière plastique.
